# FASCICULE DE BREVET EUROPEEN

(11) **EP 2 517 141 B1**
(45) Date de publication et mention de la délivrance du brevet: **24.06.2020**
(21) Numéro de dépôt: 10810772.3
(22) Date de dépôt: 16.12.2010
(51) Int. Cl.: G06F 21/32

(54) **CARTE A PUCE MULTI-APPLICATIFS AVEC VALIDATION BIOMETRIQUE**
MEHRZWECK-CHIPKARTE MIT BIOMETRISCHER VALIDIERUNG
MULTIPLE APPLICATION CHIP CARD HAVING BIOMETRIC VALIDATION

(30) Priorité: 22.12.2009 FR 0959414
(43) Date de publication de la demande: 31.10.2012
(73) Titulaire: Mereal Biometrics, 75017 Paris (FR)
(72) Inventeur: PARTOUCHE, Patrick, F-06400 Cannes (FR); BLOT, Philippe, F-78640 Neauphle le Château (FR); MOBETIE, Didier, F-78000 Versailles (FR)
(74) Mandataire: IPAZ
(86) Numéro de dépôt international: PCT/FR2010/052767
(87) Numéro de publication internationale: WO 2011/083241

(56) Documents cités:
- WO-A1-03/084124
- WO-A1-2009/015114
- US-A1- 2008 234 935
- J. Corbet, A. Rubini, G. Kroah-Haetman: "Linux Device Drivers", INET , 27 janvier 2005 (2005-01-27), XP002593316, Extrait de l'Internet: URL:http://lwn.net/images/pdf/LDD3/ch01.pd f [extrait le 2010-07-23]

## Description

La présente invention concerne le domaine technique des dispositifs d'accès sécurisé ou de communication sécurisée. Elle trouve une application particulièrement intéressante, mais non exclusivement, dans la technologie des cartes à puces avec ou sans contact telles que des cartes à puce RFID (Identification par Radio Fréquence ou « Radio Frequency Identification » en anglais). L'invention concerne notamment une carte à puce sans contact de type NFC, Mifare, ISO 14443 ou 15693, c'est-à-dire ayant une antenne RF et émettant quand elle se trouve dans un champ électromagnétique approprié.

D'une façon générale, une carte à puce comprend une (ou plusieurs) puce électronique en silicium contenant des informations plus ou moins sensibles et relatives au porteur de la carte. A titre d'exemple, dans la technologie RFID, la puce est généralement connectée à une antenne. Une carte RFID peut avoir le format d'une carte à puce classique, mais peut également revêtir différentes formes telles qu'un badge, une étiquette (« tag »), un porte-clés ou autre... Une batterie intégrée peut être prévue de façon à étendre les fonctionnalités de la carte.

La technologie RFID, basée sur le principe de l'induction électromagnétique est de plus en plus répandue dans la vie de tous les jours. Initialement utilisée pour la gestion des stocks, cette technologie a été massivement répandue dans le domaine du contrôle d'accès. Elle est en plein essor dans le domaine du passeport et du paiement. Au Japon par exemple, elle est très utilisée comme moyen de paiement par le protocole Felica. Aux Etats-Unis, les premiers terminaux de paiement basés sur le protocole ISO14443A ont déjà été déployés. Le déploiement en France est en cours aujourd'hui.

Malheureusement, l'engouement pour cette technologie s'est fait au détriment de l'aspect sécuritaire. En effet, une personne mal intentionnée peut accéder librement aux informations contenues dans une puce RFID. Et l'entité qui dispose d'un lecteur RFID n'est pas certaine que le possesseur de la carte RFID est bien la personne dont des données confidentielles sont stockées dans la carte.

On connaît des systèmes permettant d'authentifier une personne en utilisant un circuit biométrique.

On connaît le document US20070016940 décrivant une carte dotée d'un circuit biométrique pour identifier le porteur de la carte et des moyens de contrôle d'accès par mot de passe. Le document wo03084124 décrit une carte à puce dotée d'un circuit biométrique pour authentifier l'utilisateur et d'un bouton de sélection pour sélectionner des données contenues dans la carte ; un circuit RFID permettant la communication avec l'extérieur. US20080234985 décrit un circuit avec détecteurs.

La présente invention a pour but une solution alternative aux solutions existantes de sécurisation de données contenues dans une carte.

La présente invention est d'un cadre plus large puisqu'elle a pour but une nouvelle carte intelligente capable d'intégrer de nombreuses fonctionnalités. La présente invention ambitionne de nombreuses applications dans la technologie sans fil et/ou avec contact.

Un autre but de l'invention est un dispositif enrichi capable de prendre en compte l'environnement dans lequel il se trouve.

On atteint au moins l'un des buts précités avec un dispositif de communication sans fil, comprenant :
- une pluralité de circuits applicatifs qui sont associés chacun à au moins un service applicatif contenu de façon sécurisée au sein du dispositif, chaque circuit applicatif étant apte à être excité par un signal externe,
- une unité de commande :
- pour identifier un circuit applicatif excité,
- pour identifier un service applicatif associé à ce circuit applicatif excité, et
- pour activer ledit service applicatif excité en réponse à une autorisation d'activation, et
- un circuit biométrique pour authentifier l'utilisateur de façon à générer ladite autorisation d'activation.

Un service applicatif peut comprendre une application logicielle que l'on exécute lorsque ce service applicatif est activé.

L'activation d'un service applicatif consiste notamment à le rendre accessible de l'extérieur, exécuter un algorithme ou bien déverrouiller une application ou des données.

Avec le dispositif selon l'invention, on réalise une double vérification avant d'activer un service applicatif. La première vérification est environnementale puisqu'il s'agit de détecter un signal venant de l'environnement extérieur. La seconde vérification est biométrique. On dispose ainsi d'un système sécurisé, intelligent et économe en énergie. Le dispositif selon l'invention est intelligent car il est auto-adaptatif. Il est capable de reconnaître l'environnement dans lequel il est utilisé et d'enclencher le mécanisme de reconnaissance biométrique qui autorisera ou non le service applicatif correspondant. Le dispositif selon l'invention est multi-applications et peut choisir de façon automatique le service applicatif adéquat.

Le dispositif selon l'invention détermine l'action ou le canal de communication adapté face à un stimulus et fait valider l'activation par le porteur du dispositif grâce à sa signature biométrique.

Selon une caractéristique avantageuse de l'invention, les circuits applicatifs comprennent un émetteur-récepteur de signaux radiofréquences. Il peut s'agir d'une antenne radiofréquence.

Le service applicatif qui est activé peut être tout type d'application utilisant l'antenne radiofréquence. On peut utiliser un signal radiofréquence pour ouvrir une porte dans des hôtels ou autre, ou activer une machine à sous par exemple. L'unité de commande peut comprendre une puce de type puce RFID.

Selon l'invention, ces circuits applicatifs peuvent comprendre au moins un connecteur métallique pour communication avec un lecteur par exemple.

Avantageusement, les circuits applicatifs comprennent au moins un détecteur environnemental. Ce détecteur environnemental peut être l'un des éléments suivants :
- un détecteur acoustique,
- un détecteur thermique,
- un détecteur olfactif,
- un photo-détecteur,
- un détecteur de pression, et
- un accéléromètre.

Ces détecteurs peuvent notamment être réalisés en utilisant des capteurs MEMS.

On peut prévoir que l'unité de commande n'identifie un circuit applicatif excité que lorsque l'excitation atteint un seuil prédéterminé. On peut aussi envisager le fait que le signal externe d'excitation est codé de sorte que l'unité de commande ne considère l'excitation qu'après analyse du code. Ce code peut également servir à identifier un service applicatif parmi plusieurs services applicatifs possibles. Ce code peut se manifester notamment sous la forme d'une mélodie particulière dans le cadre d'un détecteur acoustique, d'une onde ou fréquence de signal lumineux particulière dans le cas du photodétecteur, d'un signal RFID codé, et ainsi de suite.

De préférence, le circuit biométrique comprend un capteur biométrique associé à une unité de calcul pour traiter des données biométriques. Les données d'identification d'un ou plusieurs utilisateurs peuvent être stockées dans l'unité de calcul ou dans une mémoire associée au cours d'une étape d'enrôlement. En fonctionnement, à chaque sollicitation du circuit biométrique, l'utilisateur interagit avec le capteur biométrique qui transmet des données détectées vers l'unité de calcul pour une comparaison et une authentification.

Le circuit biométrique peut ainsi générer directement l'autorisation d'activation. Mais, lorsque le circuit biométrique ne comporte pas une unité de calcul, la comparaison peut se faire au sein de l'unité de commande.

Avantageusement, le dispositif selon l'invention comprend une interface homme-machine pour indiquer un état de fonctionnement. Il peut s'agir d'indicateurs sonores pour émettre un son particulier, une voix ou de la musique à partir d'un élément piézoélectrique. Il peut s'agir d'indicateurs visuels comprenant des DELS pour Diodes électroluminescentes. L'interface homme-machine peut également proposer un écran d'affichage, un clavier, un micro et des enceintes par exemple, pour accéder à l'unité de commande.

Le dispositif selon l'invention peut être alimenté par une batterie intégrée ou de préférence une pile qui est flexible ou non, rechargeable ou non. On peut par exemple envisager un capteur solaire pour recharger une pile photovoltaïque intégrée dans le dispositif. Autrement, on peut utiliser une alimentation par une source externe, notamment lorsqu'on utilise des dispositifs peu mobiles.

De préférence, le dispositif est un élément portatif sous un format de carte à puce, de clé USB, ou d'étiquette électronique.

Selon un autre aspect de l'invention, il est proposé un procédé mis en œuvre dans une carte de communication sans fil comprenant une pluralité de circuits applicatifs, une unité de commande et un circuit biométrique ; ce procédé comprenant les étapes suivantes :
on détecte un signal externe d'excitation au moyen d'un des circuits applicatifs, chaque circuit applicatif étant associé à au moins un service applicatif contenu de façon sécurisée au sein de la carte,
au sein de l'unité de commande, on identifie le circuit applicatif excité et le service applicatif associé à ce circuit applicatif excité, et on démarre un processus d'authentification par comparaison biométrique au sein du circuit biométrique, puis on active ledit service applicatif excité en réponse à une autorisation d'activation provenant du circuit biométrique.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description ci-dessous effectuée en référence aux dessins annexés qui illustrent des formes non limitatives de réalisation d'une carte à puce RFID auto-adaptative intégrant un circuit biométrique.
Les figures 1 à 4 sont des schémas simplifiés illustrant le principe général de mise en œuvre d'un dispositif selon l'invention,
Les figures 5 à 8 sont des schémas simplifiés illustrant un mode de mise en œuvre du dispositif selon l'invention appliqué à un circuit RFID,
La figure 9 est une vue générale d'une carte à puce selon l'invention.

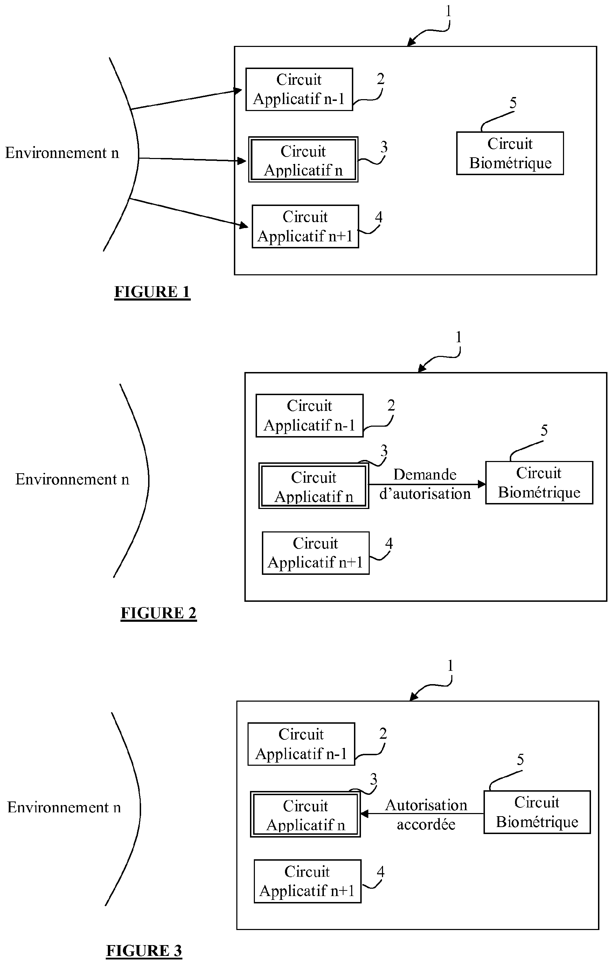

Sur les figures 1-9, les différents éléments communs aux diverses variantes ou formes de réalisation portent les mêmes références.

Le principe d'une carte auto-adaptative selon l'invention est schématiquement illustré sur les figures 1 à 4 sur lesquelles on distingue une carte à puce 1 comprenant d'une part un ensemble de circuits applicatifs 2 à 4 et, d'autre part, un circuit biométrique 5.

La carte à puce 1 peut comporter de nombreux circuits applicatifs, seuls trois d'entre eux sont représentés ici. Les références 2 à 4 représentent respectivement les circuits applicatifs n-1, n et n+1. Un circuit applicatif peut être constitué d'un émetteur-récepteur associé à un service applicatif. Chaque circuit applicatif est sensible à un phénomène physique donné caractérisant l'environnement dans lequel se trouve la carte. Ces phénomènes physiques peuvent comprendre le thermique, le toucher (contact), la lumière, l'olfactif, l'acoustique, la pression, le champ électromagnétique,... Lorsque la carte est plongée dans un environnement « n », le circuit applicatif n détecte la présence de cet environnement qui lui est directement associé, mais n'active pas le service applicatif n correspondant. Ce service applicatif peut être un protocole d'échange avec cet environnement « n » ou l'exécution d'un programme particulier.

Les autres circuits applicatifs n-1 et n+1 restent insensibles : l'environnement « n » n'est pas reconnu par ces circuits applicatifs.

Ensuite, une demande d'autorisation est transmise vers le circuit biométrique 5 comme on le voit sur la figure 2. Dès réception de cette demande d'autorisation, le circuit biométrique démarre un processus d'authentification de façon à reconnaître et identifier l'utilisateur de la carte. Pour ce faire, le circuit biométrique comporte un capteur biométrique qui peut être de différents types : par analyse de caractéristiques physiques (empreinte digitale, imagerie de l'iris, imagerie de la rétine, ...), par analyse comportementale (analyse vocale, signature,...).

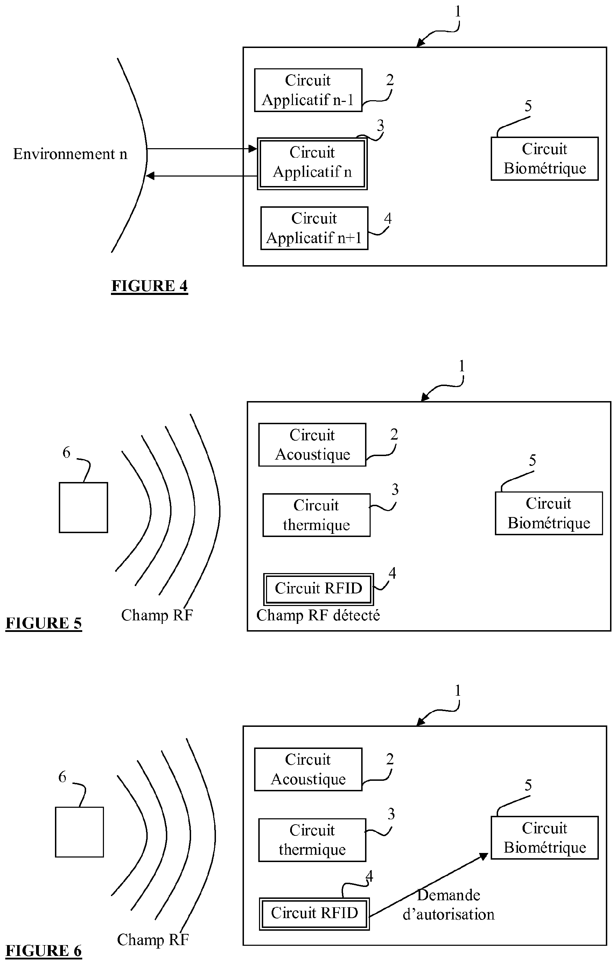

L'utilisateur doit alors se soumettre à la détection biométrique de façon à ce que le circuit biométrique récupère des données qui sont ensuite comparées à des données contenues dans la carte. Lorsque la comparaison est satisfaisante, la reconnaissance biométrique est alors positive et un signal d'accord est envoyé pour activer le servie applicatif n comme on le voit sur la figure 3. Une fois le service applicatif activé, le circuit applicatif n peut interagir avec l'environnement comme on le voit sur la figure 4.

Sur les figures 5 à 8, on voit un exemple de réalisation d'un dispositif selon l'invention. La carte est toujours désignée par la référence 1. Les circuits applicatifs 2 à 4 sont respectivement un circuit acoustique, un circuit thermique et un circuit RFID.

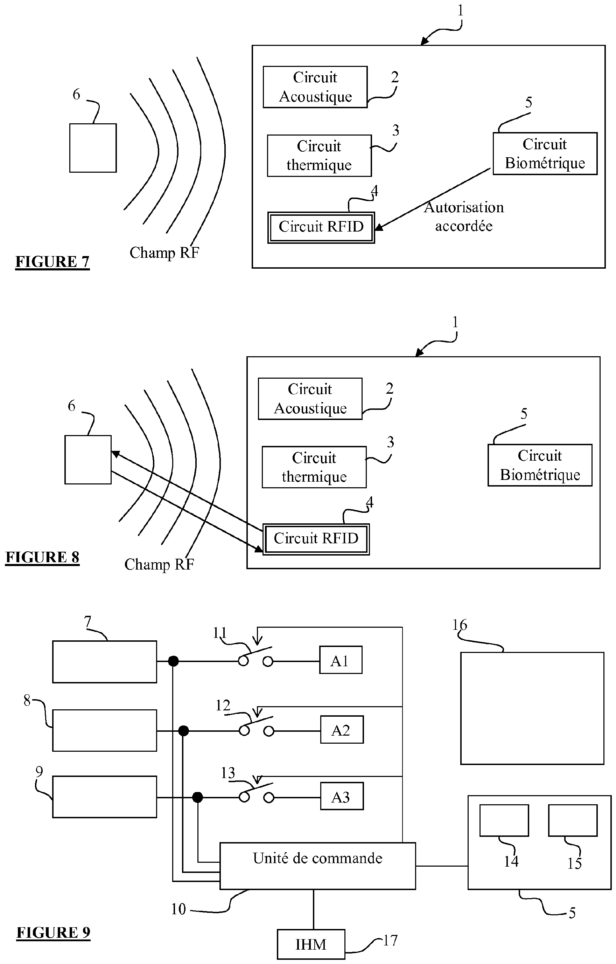

Dans cet exemple de réalisation, l'environnement est représenté par un lecteur RFID 6 qui génère un champ électromagnétique ou champ RF vers la carte à puce 1. Le circuit RFID détecte ce champ RF et transmet sur la figure 6 une demande d'autorisation vers le circuit biométrique 5. Cette demande d'autorisation a pour but d'activer un service de communication RFID entre le circuit RFID 4 et le lecteur RFID 6. Le circuit biométrique 5 authentifie l'utilisateur puis transmet un signal d'accord ou de désaccord vers le circuit RFID. En cas d'accord tel que représenté sur la figure 7, le circuit RFID active le service de communication qui permet notamment le transfert de données ou de consigne vers le lecteur RFID 6 comme illustré sur la figure 8. Le lecteur RFID 6 peut être associé à une porte, à une machine à sous ou à tout autre système de sorte que la réception d'une consigne provenant de la carte à puce peut entraîner l'ouverture de la porte, l'activation de la machine à sous, la mise sous tension ou en veille d'un système, ..

La consigne peut comporter des données personnelles de l'utilisateur ainsi que des instructions codées ou non destinées au lecteur RFID 6.

Le signal de l'environnement détecté par un circuit applicatif peut être un signal codé ou non permettant notamment de distinguer quel service applicatif nécessite d'être activé lorsque par exemple plusieurs services applicatifs sont susceptibles d'être activés via ce circuit applicatif.

On peut envisager que le service applicatif activé lance une communication avec une machine à sous par champ RF pour par exemple créditer un compte de l'utilisateur dans la machine à sous ou récupérer des gains réalisés par l'utilisateur, notamment en temps réel.

La figure 9 est un schéma bloc simplifié d'un exemple de réalisation d'une carte à puce selon l'invention. On distingue un émetteur-récepteur acoustique 7 associé à un seul service applicatif A1. L'émetteur-récepteur thermique 8 est associé à un seul service applicatif A2. L'émetteur-récepteur RFID 9 est associé à un seul service applicatif A3. On peut imaginer un système plus complexe dans lequel un émetteur-récepteur est associé à plusieurs services applicatifs. On peut même prévoir d'utiliser plusieurs signaux d'excitation détectés simultanément par plusieurs émetteur-récepteurs pour déterminer un service applicatif adéquat pour l'environnement en cours.

Tel qu'illustré sur la figure 9, dans chaque liaison entre l'émetteur-récepteur et son service applicatif associé, on introduit respectivement un interrupteur commandé 11, 12 et 13, de sorte qu'un service applicatif n'est activé que lorsque l'interrupteur commandé associé est fermé.

Sur la figure 9 chaque émetteur-récepteur 7, 8 et 9 est relié à une unité de commande 10 qui gère l'ensemble des composants et programmes logiciels de la carte à puce 1. L'unité de commande 10 est un microcontrôleur équipé :
- d'une mémoire flash renfermant les applications logicielles pour son propre fonctionnement et destinées à commander le circuit biométrique 5,
- d'une mémoire RAM,
- d'une horloge, et
- de plusieurs entrées/sorties.

Elle est sous la forme d'une puce intégrée dans la carte et présente une consommation réduite. L'unité de commande 10 est configurée pour fermer un des interrupteurs 11, 12 et 13 en réponse à un accord d'activation émis par le circuit biométrique 5.

Une interface homme-machine IHM 17 comporte des moyens d'affichage, de saisie, de diffusion sonore et visuelle. La diffusion visuelle peut se faire via des diodes électroluminescentes DELs. Une batterie intégrée 16 alimente l'ensemble des composants de la carte 1.

Le circuit biométrique 5 comporte un capteur biométrique 14 qui se charge de la saisie des données biométriques brutes. On utilise un capteur d'empreinte digitale. Le circuit biométrique 5 comporte également une unité de calcul 15 capable de traiter des données biométriques de façon à réaliser l'enrôlement et des comparaisons d'empreintes.

L'enrôlement se déroule de la manière suivante :
- l'utilisateur active la carte via le circuit de commande,
- le circuit de commande active le circuit biométrique en le mettant en mode « enrôlement »,
- l'utilisateur pose son doigt sur le capteur d'empreinte qui envoie des informations correspondantes vers l'unité de calcul, et
- lorsque ces informations sont transférées puis stockées dans l'unité de calcul, l'unité de commande informe l'utilisateur que l'enrôlement s'est bien passé par le biais de l'interface IHM 17.

Le fonctionnement de la carte peut être le suivant. Lorsqu'un signal d'excitation est détecté par l'un des émetteurs-récepteurs 7, 8 ou 9, par exemple l'émetteur-récepteur 7, l'unité de commande 10 est activée et démarre un processus d'authentification :
- le circuit de commande active le circuit biométrique en le mettant en mode « authentification »,
- l'utilisateur pose son doigt sur le capteur d'empreinte qui envoie des informations correspondantes vers l'unité de calcul,
- l'unité de calcul compare ces informations avec des informations préalablement stockées lors de la phase d'enrôlement, et
- après authentification, l'unité de commande informe l'utilisateur du résultat et désactive le circuit biométrique.

En cas de réponse positive (authentification réussie), l'unité de commande ferme alors l'interrupteur 11 de façon à permettre la communication du service applicatif A1 avec l'environnement extérieur via l'émetteur-récepteur 7. Bien entendu, les interrupteurs commandés 11, 12 et 13 peuvent être réalisés sous forme logicielle, l'accès aux services applicatifs étant obtenus après réception d'un accord d'authentification.

Bien sûr, l'invention n'est pas limitée aux exemples qui viennent d'être décrits et de nombreux aménagements peuvent être apportés à ces exemples sans sortir du cadre de l'invention. Le dispositif peut s'appliquer à différents domaines tels que :
Le domaine bancaire,
L'identification d'individu,
Le domaine du Jeux,
La clef numérique pour ouverture de porte,
Le domaine de l'enregistrement/lecture de message,
La restitution de data,
Le domaine médical par exemple pour l'analyse de sang ou de l'ADN.

## Revendications

1. Dispositif de communication d'accès sécurisé, comprenant :
- une pluralité de circuits applicatifs qui sont associés chacun à au moins un service applicatif contenu de façon sécurisée au sein du dispositif, chaque circuit applicatif comprenant au moins un détecteur environnemental et étant apte à être excité par un signal externe caractérisant l'environnement dans lequel se trouve le dispositif, le dispositif de communication comprenant un émetteur-récepteur de signaux radiofréquences pour la communication avec l'extérieur,
- une unité de commande permettant d'identifier le circuit applicatif excité et le service applicatif associé, et d'activer ledit service en réponse à une autorisation d'activation, et
- un circuit biométrique pour authentifier l'utilisateur de façon à générer ladite autorisation d'activation ; le service applicatif associé utilisant ledit émetteur-récepteur de signaux radiofréquences pour communiquer avec l'extérieur.

2. Dispositif selon l'une quelconque des revendications précédentes, **caractérisé en ce que** les circuits applicatifs comprennent au moins l'un des éléments suivants :
- un détecteur acoustique ;
- un détecteur thermique ;
- un détecteur olfactif ;
- un photo-détecteur ;
- un détecteur de pression ;
- un accéléromètre.

3. Dispositif selon l'une quelconque des revendications précédentes, **caractérisé en ce que** le circuit biométrique comprend un capteur biométrique associé à une unité de calcul pour traiter des données biométriques.

4. Dispositif selon l'une quelconque des revendications précédentes, **caractérisé en ce qu'**il comprend une interface homme-machine pour indiquer un état de fonctionnement du dispositif ou pour accéder à l'unité de commande.

5. Dispositif selon l'une quelconque des revendications précédentes, **caractérisé en ce qu'**il est alimenté par une pile flexible ou non, rechargeable ou non.

6. Dispositif selon l'une quelconque des revendications 1 à 5, **caractérisé en ce qu'**il est alimenté par une source externe.

7. Dispositif selon l'une quelconque des revendications précédentes, **caractérisé en ce qu'**il est sous un format de carte à puce, de clé USB, ou d'étiquette électronique.

8. Procédé mis en œuvre dans un dispositif de communication d'accès sécurisé comprenant une pluralité de circuits applicatifs, une unité de commande et un circuit biométrique ; ce procédé comprenant les étapes suivantes :
- détecter un signal externe d'excitation au moyen d'un des circuits applicatifs, chaque circuit applicatif comprenant au moins un détecteur environnemental et étant apte à être excité par un signal externe, caractérisant l'environnement dans lequel se trouve le dispositif, et étant associé à au moins un service applicatif contenu de façon sécurisée au sein du dispositif de communication d'accès sécurisé
- au sein de l'unité de commande, identifier le circuit applicatif excité et le service applicatif associé à ce circuit applicatif excité, et démarrer un processus d'authentification par comparaison biométrique au sein du circuit biométrique, puis activer ledit service applicatif excité en réponse à une autorisation d'activation provenant du circuit biométrique, la communication avec l'extérieur étant assurée par un émetteur-récepteur de signaux radiofréquences disposé dans le dispositif de communication d'accès sécurisé.

## Patentansprüche

1. Vorrichtung zur Kommunikation mit gesichertem Zugang, mit:
- einer Vielzahl von Anwendungsschaltkreisen, die jede zumindest einem Anwendungsdienst zugeordnet sind, der gesichert innerhalb der Vorrichtung enthalten ist, wobei jeder Anwendungsschaltkreis zumindest einen Umgebungsdetektor aufweist und in der Lage ist, von einem externen Signal angeregt zu werden, welches die Umgebung charakterisiert, in der sich die Vorrichtung befindet, wobei die Kommunikationsvorrichtung einen Sender-Empfänger für Radiofrequenzsignale für die Außenkommunikation aufweist,
- einer Steuereinheit, um den angeregten Anwendungsschaltkreis und den zugeordneten Anwendungsdienst zu identifizieren, und um diesen Dienst als Antwort auf eine Aktivierungsgenehmigung zu aktivieren, und
- einem biometrischen Schaltkreis für das Authentifizieren des Nutzers, um die Aktivierungsgenehmigung zu generieren; wobei der zugeordnete Anwendungsdienst den Sender-Empfänger für Radiofrequenzsignale für die Außenkommunikation nutzt.

2. Vorrichtung nach einem der voranstehenden Ansprüche, **dadurch gekennzeichnet, dass** die Anwendungsschaltkreise zumindest eines der folgenden Elemente aufweisen:
- einen akustischen Detektor;
- einen thermischen Detektor;
- einen olfaktorischen Detektor;
- einen Fotodetektor;
- einen Druckdetektor;
- einen Beschleunigungsmesser.

3. Vorrichtung nach einem der voranstehenden Ansprüche, **dadurch gekennzeichnet, dass** der biometrische Schaltkreis einen biometrischen Sensor aufweist, der einer Recheneinheit zur Verarbeitung biometrischer Daten zugeordnet ist.

4. Vorrichtung nach einem der voranstehenden Ansprüche, **dadurch gekennzeichnet, dass** sie eine Schnittstelle Mensch-Maschine für das Anzeigen eines Betriebszustandes der Vorrichtung oder für das Zugreifen auf die Steuereinheit aufweist.

5. Vorrichtung nach einem der voranstehenden Ansprüche, **dadurch gekennzeichnet, dass** sie durch eine flexible oder unflexible und aufladbare oder nicht-aufladbare Batterie versorgt ist.

6. Vorrichtung nach einem der Ansprüche 1 bis 5, **dadurch gekennzeichnet, dass** sie durch eine externe Quelle versorgt ist.

7. Vorrichtung nach einem der voranstehenden Ansprüche, **dadurch gekennzeichnet, dass** sie im Format einer Chipkarte, eines USB-Sticks oder eines elektronischen Etiketts ist.

8. Verfahren zum Durchführen in einer Vorrichtung zur Kommunikation mit gesichertem Zugang, die eine Vielzahl von Anwendungsschaltkreisen, eine Steuereinheit und einen biometrischen Schaltkreis aufweist, wobei das Verfahren die folgenden Schritte aufweist:
- Detektieren eines externen Anregungssignals mittels eines der Anwendungsschaltkreise, wobei jeder Anwendungsschaltkreis zumindest einen Umgebungsdetektor aufweist und in der Lage ist, durch ein externes Signal angeregt zu werden, welches die Umgebung charakterisiert, in der sich die Vorrichtung befindet, und zumindest einem Anwendungsdienst zugeordnet ist, der gesichert innerhalb der Vorrichtung zur Kommunikation mit gesichertem Zugang enthalten ist,
- Identifizieren des angeregten Anwendungsschalkreises sowie des dem angeregten Anwendungsschaltkreis zugeordneten Anwendungsdienstes innerhalb der Steuereinheit und Starten eines Authentifizierungsprozesses durch biometrischen Vergleich innerhalb des biometrischen Schaltkreises, dann Aktivieren des angeregten Anwendungsdienstes als Antwort auf eine von dem biometrischen Schaltkreis stammende Aktivierungsgenehmigung, wobei die Außenkommunikation durch einen in der Vorrichtung zur Kommunikation mit gesichertem Zugang angeordneten Sender-Empfänger von Radiofrequenzen gesichert wird.

## Claims

1. A secured communication device, including:
- a plurality of application circuits which are each related to at least one application service securely contained within the device, each application circuit comprising at least an environmental detector and being excitable by an external signal characterizing the environment wherein the device is situated, the communication device comprising a radiofrequency signal transceiver for communicating with the outside,
- a control unit making it possible to identify the excited application circuit and the related application service, and to activate said service in response to an activation authorization, and
- a biometric circuit for authenticating the user so as to generate said activation authorisation; the related application service using said radiofrequency signal transceiver for communicating with the outside.

2. The device according to any of the preceding claims, **characterised in that** the application circuits include at least one of the following elements:
- an acoustic detector;
- a heat detector;
- an olfactory detector;
- a photodetector;
- a pressure detector;
- an accelerometer.

3. The device according to any of the preceding claims, **characterised in that** the biometric circuit includes a biometric sensor related to a calculation unit for processing biometric data.

4. The device according to any of the preceding claims, **characterised in that** it includes a human-machine interface for indicating an operating state of the device or for accessing the control unit.

5. The device according to any of the preceding claims, **characterised in that** it is powered by a cell which is flexible or not, rechargeable or not.

6. The device according to any of claims 1 to 5, **characterised in that** it is powered by an external source.

7. The device according to any of the preceding claims, **characterised in that** it is in the format of a chip card, USB key or electronic tag.

8. A method implemented in a secured access communication device including a plurality of application circuits, a control unit and a biometric circuit; this method including the following steps:
detecting an excitation external signal by means of one of the application circuits, each application circuit comprising at least an environmental detector and being excitable by an external signal characterizing the environment wherein the device is situated, and being related to at least one application service securely contained within the secured access communication device,
within the control unit, identifying the excited application circuit and the application service related to this excited application circuit, and starting an authentication process by biometric comparison within the biometric circuit, then activating said excited application service in response to an activation authorization coming from the biometric circuit, the communication with the outside being ensured by a radiofrequency signal transceiver disposed in the secured access communication device.
